# EUROPÄISCHE PATENTANMELDUNG

(11) **EP 3 216 813 A1**
(43) Veröffentlichungstag der Anmeldung: **13.09.2017**
(21) Anmeldenummer: 16159541.8
(22) Anmeldetag: 10.03.2016
(51) Int. Cl.: C08G 18/10, C08G 18/28, C08G 18/30, C09J 175/04

(54) **VERWENDUNG EINES N-(N-BUTYL)-3-AMINOPROPYLMETHYDIALKOXYSILANS IN SILANTERMINIERTEN POLYURETHANEN FÜR ELASTISCHE KLEB- UND DICHTSTOFFE**

(71) Anmelder: Evonik Degussa GmbH, 45128 Essen (DE)
(72) Erfinder: SCHLOSSER, Thomas, 79594 Inzlingen (DE); NOWAK, Rüdiger, 79400 Kandern-Egerten (DE); FRITZ, Jürgen Gerhard, 79639 Grenzach-Wyhlen (DE)

(57) **Zusammenfassung**

Die vorliegende Erfindung betrifft die Verwendung eines N-(n-butyl)-3-aminopropylmethydialkoxysilans zur Herstellung silanterminierter Polyurethane für elastische Kleb- und Dichtstoffe mit einem Gehalt an Metallkatalysator. Gleichfalls ist Gegenstand ein Kleb- und/oder Dichtstoff auf Basis eines silanterminierten Polyurethans, wobei für die Herstellung des silanterminierten Polyurethans ein N-(n-butyl)-3-aminopropylmethyldialkoxysilan verwendet wird.

## Beschreibung

Die vorliegende Erfindung betrifft die Verwendung eines N-(n-butyl)-3-aminopropylmethydialkoxysilans zur Herstellung von silanterminierten Polyurethanen für elastische Kleb- und Dichtstoffe mit einem Gehalt an Metallkatalysator.

Klassische isocyanathaltige Polyurethanprepolymere werden im Allgemeinen ausgehend von Polyolen, die meist aus Ethylenoxid und/oder Propylenoxid aufgebaut sind, sowie aliphatischen oder aromatischen Isocyanaten erhalten.

Die Umsetzung von sekundären Aminosilanen mit isocyanathaltigen Polyurethanprepolymeren führt zu silanterminierten Polyurethanen, die mittels Feuchtigkeit vernetzt werden können, wie beispielsweise der DE-OS 2307794 zu entnehmen ist. Die Vernetzung entsprechender Kleb- und Dichtstoffe wird in der Regel durch den Zusatz eines Katalysators beschleunigt.

EP 1245601 A1 sowie EP 2221331 A1 offenbaren u.a. den Einsatz von aminofunktionellen Silanen zur Herstellung von metall- bzw. katalysator-freien silanterminierten Polymeren für Kleb- und Dichtstoffanwendungen.

US 4,645,816 beschreibt wie man silanterminierte Polyurethane mit höherer Dehnung für Dichtstoffe herstellen kann und zählt dazu u.a. eine Vielzahl verschiedenster amino-funktioneller Silane auf.

US 8,133,964 lehrt die Herstellung silanterminierter Harnstoffderivate für feuchtigkeitsvernetzende Schiffslacke, wobei diese im Vergleich zu Silikon-Alkydlacken bessere Eigenschaften haben sollen.

In Tabelle 1 der EP 0676403 A1 werden Dehnungen für Kleb- und Dichtstoffanwendungen auf Basis silanterminierter Polyurethanen verglichen. Dabei zeigt sich, dass die silanterminierten Polyurethanpolymere, die mit aminofunktionellen Silanen hergestellt sind, oftmals den Nachteil einer zu geringen Dehnung aufweisen.

Der vorliegenden Erfindung lag daher die Aufgabe zugrunde, eine Möglichkeit bereitzustellen, die Dehnung bei Reißfestigkeit elastischer Kleb- und Dichtstoffen auf der Basis silanterminierter Polyurethane und einem Gehalt an Metallkatalysator zu verbessern.

Die gestellte Aufgabe wird erfindungsgemäß entsprechend den Merkmalen in den hier vorliegenden Ansprüchen vorteilhaft gelöst.

Überraschenderweise wurde gefunden, dass die Umsetzung eines isocyanathaltigen Prepolymers mit dem speziellen, aliphatischen sekundären aminofunktionellen Silan N-(n-butyl)-3-aminopropylmethydialkoxysilan, insbesondere N-(n-butyl)-3-aminopropylmethyl-dimethoxysilan oder N-(n-butyl)-3-aminopropylmethyl-diethoxysilan, bei Anwesenheit eines Metallkatalysators, insbesondere eines Zinnkatalysators wie Dioctylzinn, zu silanterminierten Polyurethan-Kleb-/Dichtstoffen mit deutlich verbesserter Dehnung bei Reißfestigkeit führt.

Gegenstand der vorliegenden Erfindung ist somit die Verwendung eines N-(n-butyl)-3-aminopropylmethyldialkoxysilans zur Herstellung von silanterminierten Polyurethanen für elastische Kleb- und Dichtstoffe mit einem Gehalt an Metallkatalysator.

Vorteilhaft verwendet man dabei 6 bis 12 Gew.-% N-(n-butyl)-3-aminopropylmethyl-dimethoxysilan oder N-(n-butyl)-3-aminopropylmethyl-diethoxysilan, bezogen auf die Menge des bei der Herstellung des silanterminierten Polyurethans eingesetzten Isocyanatprepolymers.

Bevorzugt enthält eine vorliegende Kleb- bzw. Dichtmasse als Trocknungsmittel Vinyltrimethoxysilan oder Vinyltriethoxysilan, und/oder als Haftvermittler ein Aminoalkyl-/Alkyl-funktionelles Organoalkoxysilan, mit "alkyl" ausgewählt aus der Reihe bivalenter C1-C4-Kohlenwasserstoffe und "Alkyl" aus der Reihe monovalenter C1- bis C8-Kohlenwasserstoffe sowie "alkoxy" Methoxy oder Ethoxy ist. Darüber hinaus kann die vorliegende Kleb- bzw. Dichtmasse einen Weichmacher enthalten.

Gegenstand der vorliegenden Erfindung ist somit auch ein Kleb- und/oder Dichtstoff auf Basis eines silanterminierten Polyurethans, wobei für die Herstellung des silanterminierten Polyurethans erfindungsgemäß ein N-(n-butyl)-3-aminopropyl-methyldialkoxysilan verwendet wird.

So kann erfindungsgemäß durch die spezielle Verwendung von N-(n-butyl)-3-aminopropylmethyl-dialkoxysilanen gegenüber N-(n-butyl)-3-aminopropyltrialkoxysilan die Dehnung bei Reißfestigkeit silanterminierter Polyurethan-Kleb- bzw. -Dichtstoffe in vorteilhafter Weise nochmals deutlich verbessert werden.

Die vorliegende Erfindung wird durch die nachfolgenden Beispiele näher erläutert, ohne den Gegenstand der Erfindung zu beschränken:

### Beispiele:

### Edukte:

Desmoseal® M 280 (Polyisocyanatprepolymer auf der Basis von Diphenylmethan-diisocyanat mit einem NCO-Gehalt von 2,2 Gew.-% der Fa. Covestro)
Weichmacher DIDP (Diisodecylphthalat der Fa. Merck-Schuchardt)
N-(n-butyl) 3-aminopropyltrimethoxysilan (Dynasylan® 1189 von Evonik)
N-(n-butyl)-3-aminopropylmethyldimethoxysilan (herstellbar gemäß EP2307428B1 durch Umsetzung von 3-Chlorpropylmethyldimethoxysilan mit n-Butylamin)
Dynasylan® VTMO (Vinyltrimethoxysilan von Evonik)
Dynasylan® 1146 (Amino-/Alkyl-funktionelles Organosiloxan von Evonik)
Socal® 312 (Calciumcarbonatfüllstoff der Fa. Solvay)
   TIB KAT® 223 (Dioctylzinndineodecanoat der Fa. TIB Chemicals)

### Analytische Methoden:

### Bestimmung des NCO-Gehaltes mittels IR (Reaktionskontrolle):

Polyisocyanatprepolymer reagiert sehr schnell und vollständig mit aminofunktionellen Verbindungen. Zur Kontrolle der Umsetzung sind die NCO-Endgruppen des Polyisocyanatprepolymer geeignet, die sich sehr gut anhand der stark ausgeprägten NCO-Bande im IR-Spektrum (2250 - 2300 cm⁻¹) verfolgen lassen. Das Verschwinden dieser IR-Bande zeigte die vollständige Umsetzung mit dem im Überschuss eingesetzten aminofunktionellen Silan an.

### Bestimmung der Viskosität

Die Bestimmung der Viskosität erfolgte mit einem Rheometer MCR 301 von Anton Paar. Die Viskosität wurde bei 1 s⁻¹ und 23 °C mit der Kegel-Platte Messeinrichtung CP 25 bestimmt.

### Zugscherprüfung:

Bestimmung nach EN ISO 527 und DIN EN 1465

### Zugfestig keitsprüfu ng:

Bestimmung nach EN ISO 527

### Bestimmung der Dehnung bei Reißfestigkeit:

Bestimmung nach EN ISO 527

### Vergleichsbeispiel 1:

In einer Reaktionsapparatur (500 ml Vierhalskolben mit Rührer, Thermometer, Tropftrichter, Rückflusskühler, Ölbad) wurden unter Stickstoffatmosphäre 150 g Desmoseal® M 280 und 150 g DIDP vorgelegt, gemischt und unter Durchmischung bei Raumtemperatur innerhalb 1 Minute 18,881 g Dynasylan® 1189 zugetropft. Die Umsetzung verlief exotherm und erreichte eine Temperatur von 37 °C. Der Umsetzung wurde mittels IR anhand des NCO-Gehaltes überwacht bis keine NCO-Bande mehr sichtbar war. Danach wurde das Produktgemisch (Vergleichspolymer A) unter Stickstoff in eine Glasflasche überführt und verschlossen. (Vgl. dazu auch Beispiel 2 F aus EP 0676403 A1)
Die Viskositätsbestimmung des Polymers A ergab 6,2 Pa s bei 23 °C und 1 s⁻¹

### Beispiel 1:

In einer Reaktionsapparatur (500 ml Vierhalskolben mit Rührer, Thermometer, Tropftrichter, Rückflusskühler, Ölbad) wurden unter Stickstoffatmosphäre 150 g Desmoseal® M 280 und 150 g DIDP vorgelegt, gemischt und unter Durchmischung bei Raumtemperatur innerhalb 1 Minute 17,998 g N-(n-butyl)-3-aminopropylmethyl-dimethoxysilan zugetropft. Die Umsetzung verlief exotherm und erreichte eine Temperatur von 41 °C. Der Umsetzung wurde mittels IR anhand des NCO-Gehaltes überwacht bis keine NCO-Bande mehr sichtbar war. Danach wurde das Produktgemisch (Polymer B) unter Stickstoff in eine Glasflasche überführt und verschlossen.
Die Viskositätsbestimmung des Polymers B ergab 6,9 Pa s bei 23 °C und 1 s⁻¹

### Anwendungsbeispiel: (Herstellung eines silanterminierten Polyurethan-Kleb- bzw. Dichtstoffs)

In einem Speedmixer wurden jeweils das Polymer (55,48 Gew.-%, bezogen auf die spätere Dichtmasse) vorgelegt, über 30 s bei 200 UpM gemischt, Socal® 312 (46,90 Gew.-%) zugegeben und über eine weitere Minute bei 2500 UpM gemischt. Nach einer kurzen Ruhepause wurden dem so erhaltenen Gemisch 1,41 Gew.-% Dynasylan® VTMO, 1,11 Gew.-% Dynasylan® 1146 und 0,1 Gew.-% TIB KAT® 223 (jeweils bezogen auf die spätere Dichtmasse) zugesetzt und 2 x 30 s bei 2750 UpM gemischt.

Zur Prüfung der Haftung erfolgten Zugprüfungen und Zugscherprüfungen, vgl. Tabelle 1.
Für die Zugprüfung wurde der Dichtstoff in eine Teflonform eingebracht; nach einer Aushärtezeit (22 °C, 50 % rel. Feuchte) von 2 Wochen wurden die Prüfhanteln (EN ISO 527-2, 5A) ausgestanzt und geprüft.
Zur Prüfung der Haftung wurden Überlappungsverklebungen (Breite 20 mm, Länge 30 mm) gleicher Substrate (Aluminium, PET, PC, Buche) hergestellt. Nach dem Klebstoff-auftrag wurde der Klebstoff gleichmäßig verteilt und überzähliger Klebstoff ausgepresst und entfernt. Die Einstellung der Klebstoffzieldicke von ca. 0,1 mm erfolgte mit Teflonformen/-haltern, welche auch den Klebstoff während der Aushärtung fixierten. Die Zugscherprüfung erfolgte nach einer Aushärtezeit von 2 Wochen bei 22 °C und 50 % rel. Feuchte.
Die angegebenen Werte beziehen sich auf eine Mindestanzahl von 5 Prüflingen.

Die Ergebnisse der anwendungstechnischen Untersuchungen zeigen, vgl. Tabelle 1, dass der mit Polymer B (erfindungsgemäßes Beispiel 1) hergestellte silanterminierte Polyurethan-Dichtstoff vorteilhaft eine um 33 % höhere Dehnung bei Reißfestigkeit als ein silanterminierter Polyurethan-Dichtstoff mit Vergleichspolymer A (Vergleichsbeispiel 1) nach dem Stand der Technik.
Die Zugfestigkeiten sind mit 1,9 bzw. 2,0 N/mm² vergleichbar, die Zugscherfestigkeiten ("lap shear strength") zeigen mit verschiedenen Materialien ebenfalls vergleichbare Werte, wobei die vorliegenden Werte in einer guten bis sehr guten Größenordnung liegen.

**Tabelle 1: Ergebnisse der Anwendungsuntersuchungen**

| Testergebnisse | Silanterminierter Polyurethan-Dichtstoff mit Polymer A aus dem Vergleichsbeispiel 1 | Silanterminierter Polyurethan-Dichtstoff mit Polymer B aus dem erfindungsgemäßen Beispiel 1 |
|---|---|---|
| Dehnung bei Reißfestigkeit in % | 87 | 116 |
| Zugfestigkeit in N/mm² | 1,9 | 2,0 |
| Zugscherfestigkeit in N/mm² (getestet auf Buche) | 2,9 | 2,8 |
| Zugscherfestigkeit in N/mm² (getestet auf Aluminium) | 1,9 | 2,0 |
| Zugscherfestigkeit in N/mm² (getestet auf PC) | 0,8 | 1,0 |
| Zugscherfestigkeit in N/mm² (getestet auf PET) | 0,5 | 0,6 |

## Patentansprüche

1. Verwendung eines N-(n-butyl)-3-aminopropylmethyldialkoxysilans zur Herstellung von silanterminierten Polyurethanen für elastische Kleb- und Dichtstoffe mit einem Gehalt an Metallkatalysator.

2. Verwendung nach Anspruch 1,
wobei man 6 bis 12 Gew.-% N-(n-butyl)-3-aminopropylmethyldimethoxysilan oder N-(n-butyl)-3-aminopropylmethyldiethoxysilan, bezogen auf die Menge des bei der Herstellung eines silanterminierten Polyurethans eingesetzten Isocyanatprepolymers, verwendet.

3. Verwendung nach Anspruch 1 oder 2,
wobei der Metallkatalysator eine Organozinn-Verbindung ist, vorzugsweise Dioctylzinn.

4. Verwendung nach einem der Ansprüche 1 bis 3,
wobei die Kleb- bzw. Dichtmasse als Trocknungsmittel Vinyltrimethoxysilan oder Vinyltriethoxysilan enthält.

5. Verwendung nach einem der Ansprüche 1 bis 4,
wobei die Kleb- bzw. Dichtmasse als Haftvermittler ein Aminoalkyl-/Alkyl-funktionelles Organoalkoxysilan enthält, mit "alkyl" ausgewählt aus der Reihe bivalenter C1-C4-Kohlenwasserstoffe und "Alkyl" aus der Reihe monovalenter C1- bis C8-Kohlenwasserstoffe sowie "alkoxy" Methoxy oder Ethoxy ist.

6. Verwendung nach einem der Ansprüche 1 bis 5,
wobei die Kleb- bzw. Dichtmasse einen Weichmacher enthält.

7. Kleb- und/oder Dichtstoff auf Basis eines silanterminierten Polyurethans, wobei für die Herstellung des silanterminierten Polyurethans nach einem der vorangehenden Ansprüche ein N-(n-butyl)-3-aminopropylmethyldialkoxysilan verwendet wird.
